# EUROPEAN PATENT SPECIFICATION

(11) **EP 2 598 509 B1**
(45) Date of publication and mention of the grant of the patent: **07.02.2018**
(21) Application number: 11781995.3
(22) Date of filing: 27.07.2011
(51) Int. Cl.: C07F 9/40

(54) **METHOD OF THE SYNTHESIS OF DIETHYL OR DIISOPROPYL HALOALKYLPHOSPHONATES AND DIETHYL OR DIISOPROPYL HALOALKYLOXYALKYLPHOSPHONATES**
VERFAHREN ZUR SYNTHESE VON DIETHYL ODER DIISOPROPYL HALOALKYLPHOSPHONATEN UND DIETHYL ODER DIISOPROPYL HALOALKYLOXYALKYLPHOSPHONATEN
PROCÉDÉ DE SYNTHÈSE DES DIETHYL OU DIISOPROPYL HALOGÉNOALKYLPHOSPHONATES ET DES DIETHYL OU DIISOPROPYL HALOGÉNOALKYLOXYALKYLPHOSPHONATES

(30) Priority: 29.07.2010 CZ 20100583
(43) Date of publication of application: 05.06.2013
(73) Proprietor: Ústav organické chemie a biochemie Akademie ved Ceske Republiky, v.v.i., 166 10 Praha 6 (CZ)
(72) Inventor: JANSA, Petr, 563 01 Lanskroun (CZ); HOLY, Antonín, 193 00 Praha 9 (CZ); CESNEK, Michal, 100 00 Praha 10 (CZ)
(74) Representative: Herman, Vaclav
(86) International application number: PCT/CZ2011/000072
(87) International publication number: WO 2012/013168

(56) References cited:
- WO-A2-2005/086961
- WO-A2-2006/124670
- MICHIHARU MITANI ET AL: "Photoaddition of alkyl halides to olefins catalyzed by copper(I) complexes", JOURNAL OF THE AMERICAN CHEMICAL SOCIETY, vol. 105, no. 22, 1 October 1983 (1983-10-01), pages 6719-6721, XP55014823, ISSN: 0002-7863, DOI: 10.1021/ja00360a033
- KABOUDIN B ET AL: "SURFACE-MEDIATED SOLID PHASE REACTIONS: MICROWAVE ASSISTED ARBUZOV REARRANGEMENT ON THE SOLID SURFACE", SYNTHETIC COMMUNICATIONS, TAYLOR & FRANCIS GROUP, PHILADELPHIA, PA, vol. 31, no. 18, 1 January 2001 (2001-01-01), pages 2773-2776, XP001099727, ISSN: 0039-7911, DOI: 10.1081/SCC-100105324 cited in the application
- KIDDLE JAMES J ET AL: "Microwave Irradiation in Organophosphorus Chemistry 1: The Michaelis-Arbuzov Reaction", PHOSPHORUS AND SULFUR AND THE RELATED ELEMENTS, GORDON AND BREACH - HARWOOD ACADEMIC, CH, vol. 160, 1 January 2000 (2000-01-01), pages 195-206, XP009154892, ISSN: 0308-664X cited in the application
- VILLEMIN DIDIER ET AL: "Rapid and Efficient Arbuzov Reaction under Microwave Irradiation", PHOSPHORUS, SULFUR AND SILICON AND THE RELATED ELEMENTS, TAYLOR & FRANCIS, US, vol. 133, 1 January 1998 (1998-01-01), pages 209-214, XP009154919, ISSN: 1042-6507 cited in the application

## Description

### Field of the Invention

The invention deals with the method of the synthesis of diethyl or diisopropyl haloalkylphosphonates and diethyl or diisopropyl haloalkyloxyalkylphosphonates via microwave-assisted Michaelis-Arbuzov reaction under accurate control of the reaction temperature.

### Background Art

Phosphonates are compounds widely represented among biogenic materials. The naturally appearing compounds of this type include phosphonopyruvate (Siedel et al.; Nature 1984, 335, 457) or phosphonoacetate (Hilderbrand and Henderson; The Role of Phosphonates in Living Systems 1983, CRC Press, Boca Raton, Florida, pp. 5-30), but also some of the antibiotics synthesized by the *Streptomyces* family, for instance bialaphos (L-alanyl-L-alanyl-phosphinotricin), which is known as a natural inhibitor of glutaminsynthetase with *Escherichia coli* and plants (Bayer et al.; Helvetica Chimica. Acta. 1972, 55, 224 and Calanduoni, Villafranca; Bioorg. Chem. 1986, 14, 163).

Although phosphonates are present in many naturally appearing materials and can act as inhibitors of certain biosynthetic pathways, they can be degraded only by some prokaryotic microorganisms (Kononova and Nesmeyanova; Biochemistry (Moscow), 2002, 67, 184). The high chemical stability of phosphonates, along with their resistance to the degradation caused by most enzyme systems, makes this class of compounds of particular interest for the design and preparation of new medicines (Holy; Curr. Pharm. Des. 2003, 9, 2567).

In the synthesis of alkylphosphonates, the so-called Michaelis-Arbuzov (M-A) reaction of trialkyl phosphites with haloalkanes is often used (Michaelis, Kaehne; Ber. 1898, 31, 1048; Arbuzov; J. Russ. Phys. Chem. Soc. 1906, 38, 687; for a synoptic paper: Brill, Landon; Chem. Rev. 1984, 84, 577). In recent years, microwave (MW) heating has been used to increase the reactivity of starting materials in the M-A reaction (see e.g. Peyrottes et al.: Nucleosides, Nucleotides & Nucleic Acids 2007, 26, 1513; Gallier et al.: European Journal of Organic Chemistry 2007, 6, 925; Peyrottes et al.: Tetrahedron Letters 2006, 47, 7719; Kaboudin, Balakrishna: Synthetic Communications 2001, 31, 2773; Kiddle, Gurley: Phosphorus, Sulfur and Silicon and the Related Elements 2000, 160, 195; WO 2006/124670 - the last document mentioned contains also the possibility of the preparation of perfluoroalkyl phosphonates, where the perfluoroalkyl chain contains halogen atoms, but these perfluoroalkyl residues are a fully inert part of the molecule in the sense of the M-A reaction). Nevertheless, the mentioned works deal only with the preparation of the materials arising from monohaloalkanes, where it is not necessary to control the reaction and prevent the synthesis of bisphosphonates and other by-products, as is the case of reactions of dihaloalkanes in the sense of the M-A reaction.

A very important and commercially interesting subgroup of alkylphosphonates are haloalkylphosphonates (see Industrial Applicability), which have direct commercial application or are utilized for the production of functionalized alkylphosphonates, but the preparation of these haloalkylphosphonates is significantly complicated by the presence of two reactive atoms of halogen in the molecule of the starting dihaloalkanes. In the selective synthesis of haloalkylphosphonates, it is hence necessary to suppress the reaction of the remaining halogen in the molecule of the haloalkylphosphonate with the trialkylphosphite present, which otherwise leads to the creation of the relevant bisphosphonates. It is the reason that these reactions were studied intensively but practically only under the conditions of thermal heating (see e.g. Cauret et al.: Synth. Commun. 1997, 27, 647; Cauret et al.: Bull. Soc. Chim. Fr. 1997, 134, 463; Reznik et al.: Russ. Chem. Bl. 2001, 50, 125; Magerlein et al.: J. Am. Chem. Soc. 1960, 82, 593; WO 2005/086961). Under the conditions of thermal heating, the optimized methods found still require high surpluses of dihaloalkane (usually six equivalents and more), heating to high temperatures (usually heating to the boiling point of the reaction mixture) and very long reaction times (in the order of tens of hours of tens of days). Some methods (e.g. WO 2005/086961) moreover require the presence of a large amount of substances (solvents) to reduce the polarity of the medium such as xylene. Furthermore, these optimized methods provide the desired product only in yields of cca 50 %, even with the use of high surpluses of dihaloalkanes and materials for reducing the polarity of the medium.

There is only one record in the literature dealing with the preparation of haloalkylphosphonate diesters via microwave (MW) heated M-A reactions of trialkylphosphites with dihaloalkanes (Villemin et al.: Phosphorus, Sulfur, and Silicon and the Related Elements 1998, 133, 209). In this article, the problem of the reactivity of the second atom of halogen was again resolved with a high surplus of the starting dihaloalkane with respect to trialkylphosphite used. This method statistically increases the likelihood of a reaction of dihaloalkane with trialkylphosphite, which reduces the amount of bisphosphonate created. This solution is utilizable in the laboratory, but it is considerably demanding economically and not ecological in industrial production because of the high surplus of dihaloalkane in the reaction mixture (which is often impossible to regenerate efficiently). The solution method shown in the literature (Villemin et al., see above) has one more large limitation. The reactions were conducted only in an open reaction vessel with a reflux of the reaction mixture, which makes it possible to perform a M-A reaction of only ideally boiling starting materials. In this design, however, the dichloroalkanes are too volatile and unreactive, whereas the dibromoalkanes and diiodoalkanes are often too reactive and provide rich mixtures of by-products.

### Disclosure of the Invention

The invention presented endeavors to resolve the synthesis of diethyl or diisopropyl haloalkylphosphonates and diethyl or diisopropyl haloalkyloxyalkylphosphonates (i.e. the haloalkylphosphonate and haloalkyloxy- alkylphosphonate diesters) via a microwave-accelerated M-A reaction in a closed reaction vessel. With this method, it is possible to perform an M-A reactions of various dihaloalkanes or bis(haloalkyl)ethers regardless of their volatility or reactivity.

The basis of the new resolution is the very surprising finding that the reactivity of the first dihaloalkane or bis(haloalkyl)ether halogen atom is truly accelerated by microwave heating, whereas the subsequent reaction of the halogen atom in the diethyl or diisopropyl haloalkylphosphonate or diethyl or diisopropyl haloalkyloxyalkylphosphonate created is not very sensitive to microwave radiation. For the reaction of this second halogen atom with another phosphite molecule, a higher reaction temperature is therefore necessary than for the reaction of the first halogen atom in the dihaloalkane or bis(haloalkyl)ether used. The surprising difference in the reactivities of both atoms makes it possible to achieve that under accurate control of the reaction temperature a microwave-accelerated reaction occurs only with the participation of the first halogen atom, which allows the selective preparation of exclusively diethyl or diisopropyl haloalkylphosphonates or diethyl or diisopropyl haloalkyloxyalkylphosphonate. The reaction of the halogen atom in the molecule of the diethyl or diisopropyl haloalkylphosphonates or diethyl or diisopropyl haloalkyloxyalkylphosphonate with the present triethylphosphite or triisopropylphosphite , which otherwise leads to the formation of the relevant bisphosphonates, can no longer take place at the controlled reaction temperature.

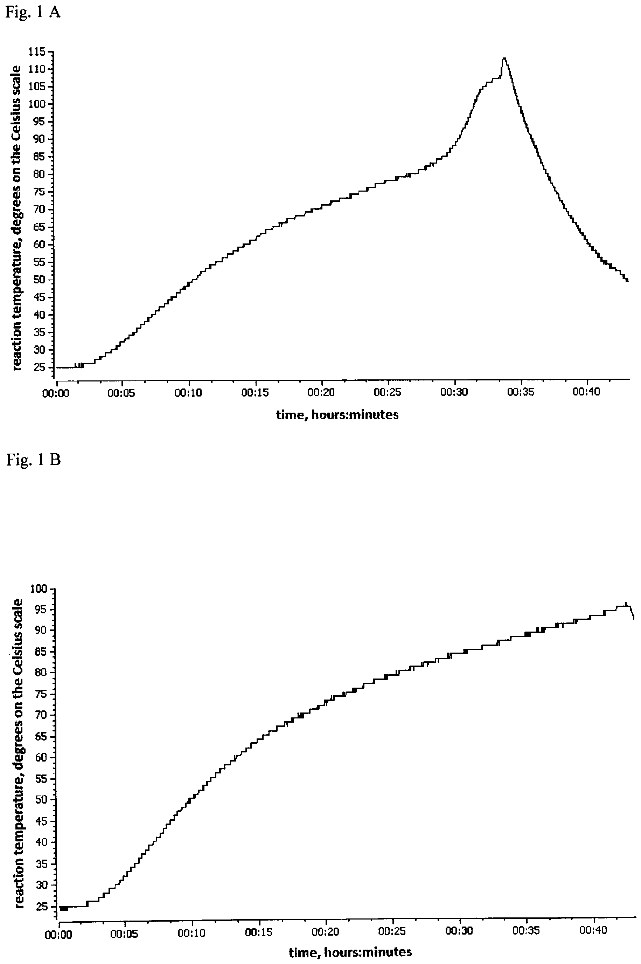

If the difference between the densities of both reacting materials is high, an almost inhomogeneous reaction mixture is created. The MW heating of this mixture then leads to an uncontrollable course of the reaction - a rapid jump to an overheating of the reaction mixture by several tens of degrees Celsius (Fig. 1A), through which the possibility of controlling the reaction temperature and selectivity of the reaction is lost. The invention submitted resolves also this problem very elegantly. The reaction mixture homogenization is creatively resolved by the addition of a small amount (about 0.05 equivalents) of the desired product directly in the reaction mixture. This produces a homogenous reaction mixture where the MW heating already leads only to the continual rise of the temperature (Fig. 1B), which again allows the use of the difference of the reactivities of the two halogenide atoms for an effective reaction selectivity control. The addition of a small amount of the product is advantageous also because unlike other possibly utilizable materials it is not necessary to extract this compound from the reaction mixture at the end of the reaction and thus increase the expense of the procedure.

Another contribution of the procedure presented is the resolution of the extremely high reactivity of diiodoalkanes or bis(iodoalkyl)ethers, where a reduction of the maximum MW power applied was utilized successfully for the elimination of the risk of local overheating at lower temperatures, at which some diiodoalkanes or bis(iodoalkyl)ethers react.

The object of the invention is thus a manner of the synthesis of diethyl or diisopropyl haloalkylphosphonates and diethyl or diisopropyl haloalkyloxyalkylphosphonates via a microwave-assisted Michaelis-Arbuzov reaction of triethylphosphite or triisopropylphosphite with dihaloalkanes or bis(haloalkyl)ethers in a closed reaction vessel, characterized in that the reaction mixture containing
- one equivalent of dihaloalkane or bis(haloalkyl)ether being an iodine, bromine or chlorine derivative, and
- one equivalent of triethylphosphite or triisopropylphosphite, and
- eventually up to 5 molar percent of the desired reaction product,
is heated by microwave irradiation with a standard frequency of 2.45 GHz in the close vessel to achieve the precise reaction temperature which remains, measured by an IR temperature sensor on the surface of the reaction vessel, in the range from 180 °C to 200 °C for dichloroalkanes and bis(chloroalkyl)ethers, in the range from 130 °C to 170 °C for dibromoalkanes and bis(bromoalkyl)ethers, and in the range from 90 °C to 110 °C for diiodoalkanes and bis(iodoalkyl)ethers; in the subsequent reaction of the first dihaloalkane or bis(haloalkyl)ether halogen atom with a triethylphosphite or triisopropylphosphite the desired diethyl or diisopropyl haloalkylphosphonate or diethyl or diisopropyl haloalkyloxyalkylphosphonate is formed, whereas the reaction of the second halogen atom with the remaining triethylphosphite or triisopropylphosphite, leading to the synthesis of bisphosphonate, no longer occurs under claimed reaction conditions.

(The method of the reaction-temperature measurement is mentioned for the clarity of the reaction description. In microwave chemistry, two types of the measurement of reaction temperature are commonly used, an IR sensor and internal thermometer, with the difference between the temperatures measured using these two methods being 20-30 °C.)

It is a further aspect of the procedure of diethyl or diisopropyl haloalkylphosphonate and diethyl or diisopropyl haloalkyloxyalkylphosphonate synthesis that in the case of an inhomogeneous reaction mixture also the desired product in the amount of 0.1-5 molar percent can be added to the reaction mixture for its homogenization, which homogenizes it and precludes its uncontrollable overheating.

In one aspect of the procedure of diethyl or diisopropyl haloalkylphosphonate and diethyl or diisopropyl haloalkyloxyalkylphosphonate synthesis the closed vessel used is a discontinuous or continuous-flow microwave reactor.

Another aspect of the procedure of diethyl or diisopropyl haloalkylphosphonate and diethyl or diisopropyl haloalkyloxyalkylphosphonate synthesis is the fact that when using a continuous-flow reactor the reaction mixture being fed is heated above the boiling point of the ethyl or isopropyl halogenide being created, which returns from the MW reactor along with the partially reacted reaction mixture. The ethyl or isopropyl halogenide created is thus continuously separated by means of distillation to reduce the risk of its reaction with the phosphite present.

An aspect of the procedure of diethyl or diisopropyl haloalkylphosphonate and diethyl or diisopropyl haloalkyloxyalkylphosphonate synthesis is also the fact that the excessive reactivity of the diiodoalkanes or bis(iodoalkyl)ethers is suppressed by lowering the maximum used microwave power of the reactor by 5 to 50 percent of the maximum power depending on the construction details of the specific reactor to limit the local overheating of the reaction mixture at lower temperatures, at which diiodoalkanes or bis(iodoalkyl)ethers react.

The reactivity selectivity of both halogen atoms is not substantially influenced by the character and size of the alkane part in the utilized dihaloalkane or bis(haloalkyl)ether - the selectivity is unexpectedly reached even when more carbon atoms are between the two halogen atoms and the electron and spherical effects of the newly introduced phosphonic residue can thus not manifest themselves.

It can be anticipated that the basis of this phenomenon is the fact that the dihaloalkane or bis(haloalkyl)ether absorbs microwave radiation to a great extent but the newly synthesized diethyl or diisopropyl haloalkylphosphonate or diethyl or diisopropyl haloalkyloxyalkylphosphonate does not absorb MW radiation to the same extent.

The resolution presented above hence allows the performance of the relevant M-A reaction only with one dihaloalkane or bis(haloalkyl)ether equivalent, namely with a high selectivity and thus also a high yield.

The general reaction scheme **I,** depicting the reaction of dihaloalkane with triethylphosphite or triisopropylphosphite yielding diethyl or diisopropyl haloalkylphosphonate and ethyl or isopropyl halogenide: 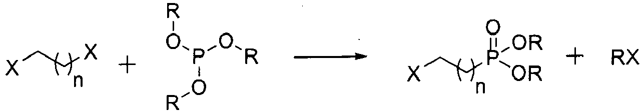 where: X = halogen (Cl, Br, I) atom; n = 0, 1, 2, 3, 4, 5; R = ethyl or isopropyl

The general reaction scheme **I** is used in Example **1,** where:
X = Cl, n = 1, R = isopropyl for the preparation of **diisopropyl 2-chloroethylphosphonate (1)** by the reaction of 1,2-dichloroethane (**A**) with triisopropylphosphite (**B**).

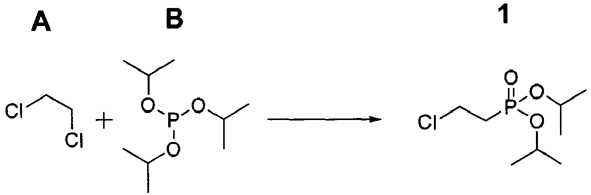

It is further used for Example **3,** where:
X = Br, n = 1, R = isopropyl for the preparation of **diisopropyl 2-bromoethylphosphonate (3)** by the reaction of 1,2-dibromoethane (**G**) with triisopropylphosphite (**B**).

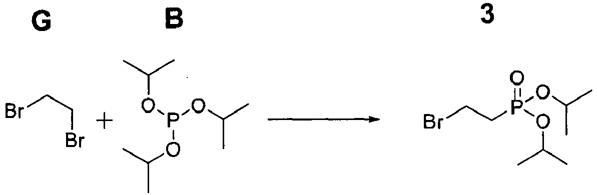

It is further used for Example **4**, where: X = Br, n = 0, R = isopropyl for the preparation of **diisopropyl bromomethylphosphonate** (**4**) by the reaction of dibromomethane (**H**) with triisopropylphosphite (**B**).

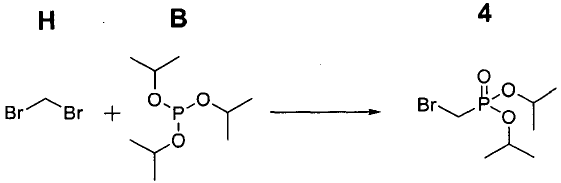

It is further used for Example **5,** where: X = I, n = 0, R = isopropyl for the preparation of **diisopropyl iodomethylphosphonate** (**5**) by the reaction of diiodomethane (**I**) with triisopropylphosphite (**B**).

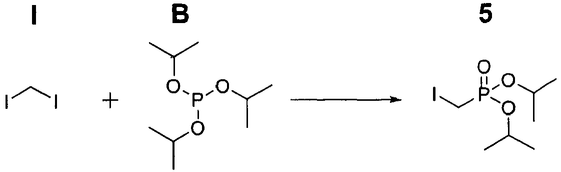

It is further used for Example **6,** where: X = Cl, n = 1, R = ethyl for the preparation of **diethyl 2-chloroethylphosphonate** (**6**) by the reaction of 1,2-dichloroethane (**A**) with triethylphosphite (**K**).

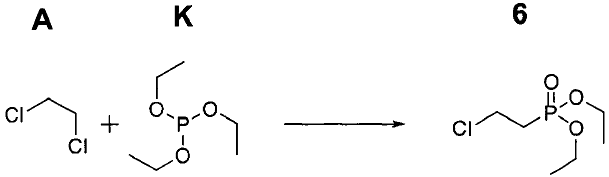

The general reaction scheme **II,** depicting the reaction of a symmetrical bis(haloalkyl)ether with triethylphosphite or triisopropylphosphite yielding diethyl or diisopropyl haloalkylphosphonate and ethyl or isopropyl-halogenide: 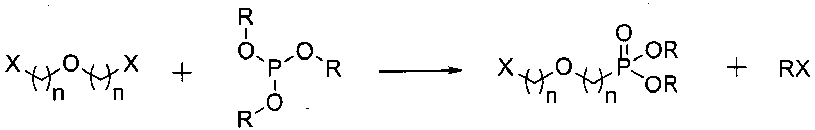
X = halogen (Cl, Br, I) atom
n=2,3,4
R = ethyl or isopropyl

The general reaction scheme **II** is used in Example **2,** where: X = Cl, n = 2, R = isopropyl for the preparation of **diisopropyl 2-(2-chloroethoxy)ethylphosphonate** (**2**) by the reaction of 2,2'-dichlorodiethylether (**F**) with triisopropylphosphite (**B**).

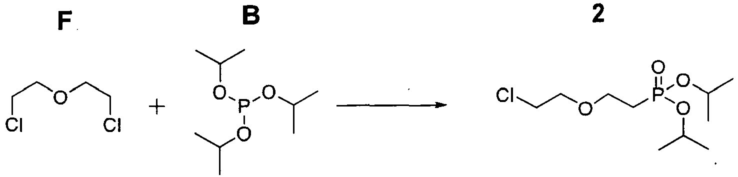

The procedure described here may be labeled as 'green' or 'environmentally-friendly', because it requires only one equivalent of each of the starting compounds, does not use solvents, and both by-products (diethyl or diisopropyl phosphonate and triethyl of triisopropyl phosphate), which are easily removable in a rotary evaporator, can be converted to an inorganic phosphate by acid hydrolysis and oxidation. For instance, in the preparation of Ethephon (2-chloroethylphosphonate, a plant-growth stimulator), the by-products of the M-A reaction do not have to be removed at all. A joint acid hydrolysis (with air access) of the whole reaction mixture, which is produced in the preparation of diisopropyl 2-chloroethylphosphonate (**1**), yields the agrochemically used compound Ethephon contaminated by inorganic phosphate, which however is used in agrochemistry as a fertilizer.

The whole synthesis procedure is more effective, faster, cheaper and more environmentally friendly than the procedures described so far in the literature. The possibility to implement the described procedure also in a continuous-flow microwave reactor allows industrial production with minimal demands on an optimization of the reaction conditions for larger quantities, eliminates some security risks, dramatically reduces the spatial demands in the production and reduces the necessity to use large-tonnage industrial reactors.

### Brief Description of the Figures

Fig. 1A depicts the course of the reaction temperature of a model reaction in the preparation of diisopropyl iodomethylphosphonate (**5**) with the use of a constant MW power of 30W - the temperature shock (explosion) at 90 °C, which leads to the uncontrollable heating of the reaction mixture up to 115 °C. The composition of the reaction mixture: triisopropylphosphite (4.0 ml; 16.0 mmol) and diiodomethane (1.3 ml; 16.0 mmol) in a test tube of a volume of 10 ml.
Fig. 1B depicts the course of the reaction temperature of the model reaction in the preparation of diisopropyl iodomethylphosphonate (**5**) with the use of a constant MW power of 30W - the addition of the product in the reaction mixture leads to the smooth course of the reaction. The composition of the reaction mixture: triisopropylphosphite (4.0 ml; 16.0 mmol), diiodomethane (1.3 ml; 16.0 mmol) and diisopropyl iodomethylphosphonate (**5**) (0.1 ml; 0.5 mmol) in a test tube of a volume of 10.

With both graphs, time in hours and minutes is on the x axis and the temperature in degrees Celsius on the y axis.

### Examples

Microwave (MW) heating was conducted in the following commercial microwave reactors:
Type I - CEM Discover®, an apparatus with focused MW heating (MW power of 0-300 W, increased by 1 W, infrared (IR) temperature sensor, possible to use in an open or closed vessel, a range of working pressures of 0-20 bar, a volume of the reaction vessel of 10 ml or 80 ml). Type II - Biotage Initiator®, an apparatus with unfocused MW heating (MW power of 0-400 W, increased by 1 W, IR temperature sensor, possible to use only in a closed vessel, a range of working pressures of 0-20 bar, a volume of the reaction vessel of 5 ml).
Type III - Milestone BatchSYNTH®, an apparatus for pilot operation production (MW power of 0-1000 W, increased by 10 W, internal temperature sensor, discontinuous mode, a range of working pressures of 0-30 bar, a volume of the reaction vessel of 250 ml).
Type IV - Milestone FlowSYNTH®, a continuous-flow pilot reactor (MW power of 0-1000 W, increased by 10 W, internal temperature sensor, continuous-flow mode, a range of working pressures of 0-30 bar, a volume of the reaction cells of 200 ml, a flow of 10-100 ml/min).

GC/MS analyses were measured on a 6890N gas chromatograph (Agilent, Santa Clara, CA, USA) connected to a quadrupole mass detector. An HP-5ms capillary (30 m x 0.25 mm; 0.25 µm; Agilent) was used for the analyses. The bearing gas was helium with a flow of 1 ml/min. The FAB mass spectra were measured on a ZAB-EQ (VG Analytical) spectrometer using FAB (ionization via Xe, accelerating voltage of 8 kV, glycerol matrix).

The NMR spectra were measured on an FT NMR spectrometer (Bruker Avance II 500) in dimethylsulfoxide-*d*₆ (hereinafter listed as DMSO-*d*₆) - ¹H at 500 MHz and ¹³C at 125.7 MHz, the chemical shifts are shown in parts per million (ppm) and the interaction constants *J* in Hz. The vacuum distillations were conducted using a VACUUBRAND - RC6® chemical hybrid pump (a maximum vacuum of 0.002 mbar, a max. pumping speed of 5.9 m³/h). The size of the vacuum was measured with a VACUUBRAND - VAP 5 ® detector (a measuring extent of 1000-10⁻³ mbar, measurement error of ±10%).

The optimized reaction was left to run ten times in order to acquire the most reproducible results (of the individual yields). The acquired reaction mixtures were subsequently jointly evaporated and distilled. The yields provided are thus average yields acquired from ten repetitions of the same reaction. The reactivity was confirmed for iodine, bromine and chlorine. The optimized reaction conditions were successfully used for further similar reactions.

### Securation procedure description

The closed reaction test tubes or reaction vessels with a prepared reaction mixture were through a septum with a needle connected to the line for the application of the vacuum and an inert atmosphere. During the intensive mixing by a magnetic stirrer, the source of the vacuum was first connected, which was kept active until air bubbles stopped appearing. The reaction mixture was then saturated with argon. This cycle of the alternating application of vacuum and argon was repeated several times (see the detailed description of the reaction procedure).

### Example 1

### The optimization of the preparation of diisopropyl 2-chloroethylphosphonate (1) by the reaction of 1,2-dichloroethane (A) with triisopropylphosphite (B) with the simultaneous production of diisopropyl phosphonate (C), triisopropyl phosphate (D) and tetraisopropyl ethylenebisphosphonate (E) as by-products.

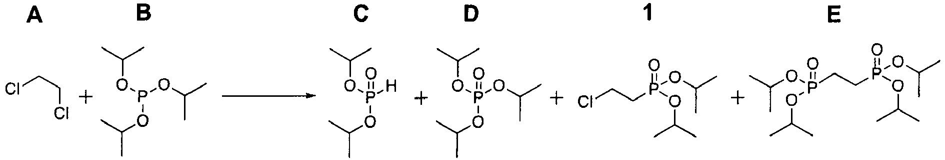

For the optimization of this reaction, a Type I MW reactor was used (with reaction test tubes of a volume of 10 ml). Triisopropylphosphite (2.0 ml; 8 mmol) and the corresponding amount of 1,2-dichloroethane were put into the MW test tubes (see Table 1). Entry 20 was prepared from half of the amount so that the 10 ml test tube would not be overfilled - 1.0 ml of triisopropylphosphite (4 mmol) and 2.7 ml of 1,2-dichloroethane (40 mmol). Because of the low amount of 1,2-dichloroethane, Entry 30 was prepared from a doubled amount - 4.0 ml of triisopropylphosphite (16 mmol) and 1.3 ml of 1,2-dichloroethane (19 mmol). The reaction test tubes were always securated five times and subsequently MW-heated following Table 1.

**Table 1. Conditions of the optimization of the preparation of diisopropyl 2-chloroethylphosphonate (1) following Example 1**

| | | | | Composition of the reaction mixture according to GC/MS (molar %) | | | | | |
|---|---|---|---|---|---|---|---|---|---|
| Entry | Time (min) | Temperature (°C) | Molar ratio **A:B** | **B** | **C** | **D** | **1** | **E** | Note |
| 1 | 20 | 130 | 4:1 | 98.7 | 0.0 | 1.3 | 0.0 | 0.0 | *a* |
| 2 | 20 | 150 | 4:1 | 98.6 | 0.0 | 1.4 | 0.0 | 0.0 | *a* |
| 3 | 20 | 130 | 4:1 | 96.0 | 0.0 | 4.0 | 0.0 | 0.0 | *a*+*b* |
| 4 | 20 | 150 | 4:1 | 98.2 | 0.0 | 1.8 | 0.0 | 0.0 | *a*+*b* |
| 5 | 20 | 180 | 4:1 | 93.0 | 0.0 | 3.1 | 3.9 | 0.0 | *a* |
| 6 | 20 | 200 | 4:1 | 85.2 | 0.0 | 3.5 | 11.4 | 0.0 | *a* |
| 7 | 20 | 180 | 4:1 | 97.3 | 0.0 | 2.7 | 0.0 | 0.0 | *a*+*b* |
| 8 | 20 | 200 | 4:1 | 95.5 | 0.0 | 4.5 | 0.0 | 0.0 | *a*+*b* |
| 9 | 80 | 210 | 4:1 | 8.6 | 15.5 | 28.7 | 46.7 | 0.5 | *a* |
| 10 | 80 | 200 | 4:1 | 15.5 | 10.1 | 20.4 | 54.0 | 0.0 | *a* |
| 11 | 80 | 180 | 4:1 | 78.1 | 0.0 | 21.9 | 0.0 | 0.0 | *a*+*b* |
| 12 | 80 | 200 | 4:1 | 81.2 | 0.0 | 18.8 | 0.0 | 0.0 | *a*+*b* |
| 13 | 80 | 200 | 4:1 | 0.0 | 13.4 | 3.2 | 83.4 | 0.0 | c |
| 14 | 80 | 200 | 4:1 | 0.0 | 13.9 | 5.0 | 81.1 | 0.0 | *d* |
| 15 | 80 | 190 | 4:1 | 19.5 | 5.3 | 1.3 | 73.9 | 0.0 | c |
| 16 | 80+80 | 190 | 4:1 | 0.0 | 12.0 | 3.3 | 84.8 | 0.0 | *e* |
| 17 | 80 | 190 | 4:1 | 98.9 | 0.0 | 1.1 | 0.0 | 0.0 | *c*+*f* |
| 18 | 160 | 180 | 4:1 | 44.2 | 1.9 | 1.4 | 52.6 | 0.0 | c |
| 19 | 160 | 190 | 4:1 | 0.0 | 10.3 | 2.2 | 87.5 | 0.0 | c |
| 20 | 160 | 190 | 10:1 | 0.0 | 8.5 | 2.3 | 89.2 | 0.0 | c |
| 21 | 160 | 190 | 4:1 | 87.9 | 0.0 | 3.3 | 8.8 | 0.0 | *c*+*g* |
| 22 | 160 | 190 | 4:1 | 85.3 | 0.3 | 3.5 | 10.9 | 0.0 | *c*+*h* |
| 23 | 160 | 190 | 4:1 | 0.0 | 73.9 | 23.7 | 2.4 | 0.0 | *c*+*i* |
| 24 | 160 | 190 | 4:1 | 82.9 | 0.6 | 3.7 | 12.8 | 0.0 | *c*+*j* |
| 25 | 160 | 190 | 4:1 | 15.3 | 13.0 | 5.9 | 65.8 | 0.0 | *c+k* |
| 26 | 160 | 190 | 4:1 | 0.0 | 22.0 | 8.6 | 69.5 | 0.0 | *c*+*l* |
| 27 | 160 | 190 | 3:1 | 1.4 | 11.2 | 10.8 | 76.1 | 0.5 | *a* |
| 28 | 160 | 190 | 2:1 | 0.1 | 13.5 | 12.8 | 72.3 | 1.3 | *a* |
| 29 | 160 | 190 | 1:1 | 4.4 | 15.8 | 14.3 | 63.1 | 2.4 | *a* |
| 30 | 190 | 190 | 1.2:1 | 0.0 | 15.7 | 2.9 | 79.1 | 2.3 | *c* |

| | | | | | | | | | |
|---|---|---|---|---|---|---|---|---|---|
| **A** = 1,2-dichloroethane, **B** = triisopropyl phosphite, **C** = diisopropyl phosphonate, **D** = triisopropyl phosphate and **E** = tetraisopropyl ethylenebisphosphonate Note: *a* (without securation), *b* (+20 molar equivalents of toluene), *c* (securated 5x), *d* (securated 5x, opened for air access and closed again), *e* (entry 15 after the reaction, opened for air access, closed, and heated for another 80 min.), *f* (+1 molar equivalent of toluene), *g* (+10 molar equivalents of *p*-xylene), *h* (+10 molar equivalents of tetrahydrofurane - THF), *i* (+10 molar equivalents of pyridine), *j* (+10 molar equivalents of diglyme), *k* (+10 molar equivalents of CH₃CN), *l* (+10 molar equivalents of *N,N*-dimethylformamide - DMF). The influence of the addition of organic solvent was studied for the needs of a continuous-flow MW reactor, where the pressure impermeability of the whole system was subsequently tested by a suitable solvent (one not reducing the yield of the conducted MW reaction - i.e. CH₃CN or DMF), which was released from the reactor before the attachment of the reaction mixture. The pressure impermeability of the reactor thus does not have to be tested by a relatively dangerous and toxic reaction mixture, but only by a suitable solvent whose residue in the MW reactor does not reduce the yield of the reaction at all. | | | | | | | | | |

### 1a - The preparation of diisopropyl 2-chloroethylphosphonate (1) (see Table 1, Entry 19)

Triisopropylphosphite (2.0 ml; 8 mmol) and 1,2-dichloroethane (2.2 ml; 32 mmol) were placed in a MW test tube with a volume of 10 ml; the entire reaction mixture was securated (5x) and while being mixed it was MW-heated in a Type I reactor to 190 °C for 160 min (max. power of 300 W). The procedure was subsequently conducted another nine times. All ten of the reaction mixtures acquired in this way were then jointly evaporated in a rotary vacuum evaporator (65 °C; 2 mbar). According to the GC/MS analysis, this unrefined reaction mixture contained the desired product in a great amount (> 90 molar %), with the main impurity being triisopropyl phosphate. The pure diisopropyl 2-chloroethylphosphonate (1) was isolated with an 83% yield (15.2 g) by a vacuum distillation at a temperature of 74-75 °C and a pressure of 0.056 mbar. The ¹H NMR and ¹³C NMR analyses were identical with the sample isolated in Example 1b.

### 1b - The preparation of diisopropyl 2-chloroethylphosphonate (1) (see Table 1, Entry 30)

Triisopropylphosphite (4.0 ml; 16 mmol) and 1,2-dichloroethane (1.3 ml; 19 mmol) were placed in a MW test tube with a volume of 10 ml; the entire reaction mixture was securated (5x) and while being mixed it was MW-heated in a Type I reactor to 190 °C for 190 min (max. power of 300 W). This procedure was conducted another nine times. All ten of the reaction mixtures acquired in this way were then jointly evaporated in a rotary vacuum evaporator (65 °C, 2 mbar). According to the GC/MS analysis, this unrefined reaction mixture contained the desired product in a great amount (> 88 mol. %), with the main impurities being triisopropyl phosphate and tetraisopropyl ethylenebisphosphonate. The pure diisopropyl 2-chloroethylphosphonate (**1**) was isolated with a 74% yield (27.2 g) by vacuum distillation at a temperature of 72-73 °C and a pressure of 0.051 mbar. To determine the reproducibility of the presented solution for various MW reactors, this experiment was repeated under otherwise identical reaction conditions in a Type II MW reactor. According to the GC/MS analysis, this new reaction mixture contained practically the same amount of all of the components. The only difference was that to achieve the same level of conversion it was necessary to extend the reaction time by 40 minutes, which is in logical accord with the construction differences of the two reactors. Type II (unlike Type I) does not provide focused MW power to the center of the reaction vessel and so a longer reaction time is necessary for the same level of MW radiation.

**Diisopropyl 2-chloroethylphosphonate** (**1**), colorless oil, boiling point (b.p.) 74-75 °C at a pressure of 0.056 mbar or 72-73 °C at a pressure of 0.051 mbar. GC/MS-EI (*R_{T}* 16.75 min), *m*/*z* (%): 145 [phosphonic acid⁺] (100). FABMS, *m*/*z* (%): 229 [M⁺] (26), 191 (19), 145 [phosphonic acid⁺] (100). ¹H NMR (DMSO-*d*₆): 4.58 d septets, 2 H, J(1',2') = 6.2, *J*(1',P) = 7.9 (H-1'); 3.69 dm, 2 H, *J*(2,P) = 11.0 (H-2); 2.26 dm, 2 H, *J*(1,P) = 18.3 (H-1); 1.25 d, 12 H, *J*(2',1') = 6.2 (H-2'). ¹³C NMR (DMSO-*d*₆): 70.03 d, *J*(1',P) = 6.4 (C-1'); 38.66 (C-2); 30.50 d, *J*(1,P) = 136.3 (C-1); 23.92 d and 23.86 d, *J*(2',P) = 3.9 and *J*(2',P) = 4.8 (C-2'). For C₈H₁₈ClO₃P (228.7) cal'd: 42.02 % C, 7.93 % H, 15.51 % Cl, 13.55 % P; found: 41.95 % C, 8.04 % H, 15.47 % Cl, 13.43 % P.

### Example 2

### 2a - The preparation of diisopropyl 2-(2-chloroethoxy)ethylphosphonate (2) (corresponding to Entry 19 from Table 1)

Triisopropylphosphite (2.0 ml; 8 mmol) and 2,2'-dichlorodiethylether (3.8 ml; 32 mmol) were placed in a MW test tube with a volume of 10 ml; the entire reaction mixture was securated (5x) and while being mixed it was MW-heated in a Type I reactor to 190 °C for 160 min (max. power of 300 W). This procedure was conducted another nine times. All ten of the reaction mixtures acquired in this way were then jointly evaporated in a rotary vacuum evaporator (70 °C, 2 mbar). According to the GC/MS analysis, this unrefined reaction mixture contained the desired product in a great amount (> 90 mol. %). The pure diisopropyl 2-(2-chloroethoxy)ethylphosphonate (**2**) was isolated by vacuum distillation by vacuum distillation at a temperature of 102-104 °C and a pressure of 0.5 mbar with a 81% yield (17.7 g). The ¹H NMR and ¹³C NMR analyses were identical with the sample isolated in Example 2c.

### Examples 2b, 2c

To increase the capacity of the synthesis, the following procedures were used:

### 2a - The preparation of diisopropyl 2-(2-chloroethoxy)ethylphosphonate (2) (relevant Entry 30 from Table 1)

Triisopropylphosphite (32.0 ml; 130 mmol) and 2,2'-dichlorodiethylether (18.3 ml; 156 mmol) were placed in a MW with a volume of 80 ml; the entire reaction mixture was securated (5x) and while being mixed it was MW-heated in a Type I reactor to 190 °C for 190 min (max. power of 300 W). The reaction mixture was subsequently evaporated in a rotary vacuum evaporator (70 °C, 2 mbar). According to the GC/MS analysis, this unrefined reaction mixture contained the desired product in a great amount (> 90 mol. %) and was contaminated predominantly by the relevant bisphosphonate. The pure diisopropyl 2-(2-chloroethoxy)ethylphosphonate (**2**) was isolated by vacuum distillation at a temperature of 101-102 °C and a pressure of 0.47 mbar with a 73% yield (25.9 g). The ¹H NMR a ¹³C NMR analyses were identical with the sample isolated in Example **2c.**

### 2c - Optimization of the preparation of diisopropyl 2-(2-chloroethoxy)ethylphosphonate (2) in a continuous-flow microwave reactor by the reaction of 2,2'-dichlorodiethylether (F) with triisopropylphosphite (B) with the simultaneous production of diisopropyl phosphonate (C) and triisopropyl phosphate (D) as by-products.

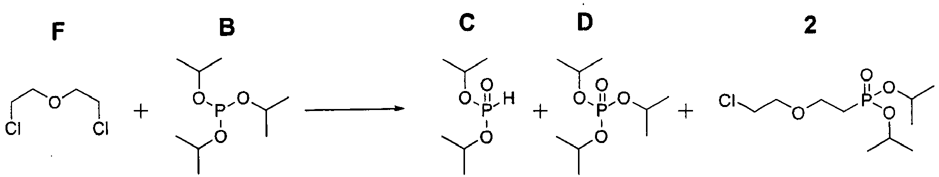

**Table 2: Conditions of the optimization of the preparation of diisopropyl 2-(2-chloroethoxy)ethylphosphonate (2) in a continuous-flow microwave reactor following Example 2c**

| | | Composition of the reaction mixture according to GC/MS (molar %) | | | |
|---|---|---|---|---|---|
| Sample | Temperature (°C) | **B** | **C** | **D** | **2** |
| 1 | 120 | 91.0 | 3.7 | 1.5 | 3.8 |
| 2 | 140 | 88.0 | 3.1 | 1.6 | 7.3 |
| 3 | 150 | 83.4 | 4.5 | 1.9 | 10.2 |
| 4 | 160 | 78.9 | 5.4 | 2.4 | 13.4 |
| 5 | 170 | 64.6 | 7.3 | 2.3 | 25.8 |
| 6 | 180 | 38.6 | 9.2 | 2.3 | 50.0 |
| 7 | 190 | 19.2 | 11.6 | 2.6 | 66.5 |
| 8 | 200 | 11.2 | 12.8 | 2.2 | 73.9 |
| 9 | 210 | 0.0 | 15.5 | 2.4 | 82.0 |

| | | | | | |
|---|---|---|---|---|---|
| **F** = 2,2'-dichlorodiethylether, **B** = triisopropylphosphite, **C** = diisopropyl phosphonate and **D** = triisopropyl phosphate | | | | | |

Triisopropylphosphite (320 ml; 1.30 mol) and 2,2'-dichlorodiethylether (183 ml; 1.56 mol) were placed in a flask with a volume of 1000 ml. The reaction mixture was securated (5x) and connected to a continuous-flow MW reactor - Type IV, which was saturated with CH₃CN (to check the pressure impermeability). The temperature of the reaction mixture in the 1000 ml flask was maintained at 60 °C by an oil bath. At this temperature, the isopropylchloride being created (which returns from the MW reactor along with the partially reacted reaction mixture) was removed by a subsequent distillation. The reaction mixture was then MW-heated (max. power of 500 W) so that the reaction temperature gradually rose from 120 °C to 210 °C in 10 °C increments over 7 h at a flow of 40 ml/min, when the partially reacted reaction mixture was returned to the supply, 1000 ml flask. After each increase, a sample of the reaction mixture leaving the MW reactor was taken for a GC/MS analysis (see Table 2 and Graph 1). After 20 minutes at 210 °C, the reaction mixture had reached full conversion according to the GC/MS analysis. The reaction mixture was subsequently evaporated in a rotary vacuum evaporator (70 °C, 2 mbar). According to the GC/MS analysis, this unrefined reaction mixture contained the desired product in a great amount (> 80 mol. %). The pure diisopropyl 2-(2-chloroethoxy)ethylphosphonate (**2**) was isolated by vacuum distillation at a temperature of 85-87 °C with a pressure of 0.32 mbar with a 70% yield (249 g).

**Diisopropyl 2-(2-chloroethoxy)ethylphosphonate** (**2**), colorless oil, b.p. 102-104°C/0.5 mbar, 101-102°C/0.47 mbar or 85-87°C/0.32 mbar. GC/MS-EI (*R_{T}* 16.60 min), *m*/*z* (%): 189 [phosphonic acid⁺] (76), 125 [phosphonic acid-C₂H₄Cl] (100). FABMS, *m*/*z* (%): 295 [M+Na⁺] (49), 273 [M⁺) (81), 189 [phosphonic acid⁺] (100). ¹H NMR (DMSO-*d*₆): 4.56 d septets, 2 H, *J*(1",2") = 6.2, *J*(1",P) = 8.0 (H-1"); 3.57-3.74 m, 6 H, (H-2; H-1'; H-2'); 2.01 dm, 2H, *J*(1,P) = 18.7 (H-1); 1.23 d, 6 H and 1.23 d, 6 H, *J*(2",1") = 6.2 and *J*(2",1") = 6.2 (H-2"). ¹³C NMR (DMSO-*d*₆): 70.34 (C-1'); 69.60 d, *J*(1",P) = 6.2 (C-1"); 64.80 (C-2); 43.79 (C-2'); 27.42 d, *J*(1,P) = 138.2 (C-1); 24.03 d and 23.97 d, *J*(2",P) = 3.7 and *J*(2",P) = 4.9 (C-2"). For C₁₀H₂₂ClO₄P (272.7) cal'd: 44.04 % C, 8.13 % H, 13.00 % Cl, 11.36 % P; found: 43.93 % C, 8.18%H,13.11%Cl,11.38%P.

### Example 3

### Optimization of the preparation of diisopropyl 2-bromoethylphosphonate (3) by the reaction of 1,2-dibromoethane (G) with triisopropylphosphite (B) with the simultaneous production of diisopropyl phosphonate (C), triisopropyl phosphate (D) and tetraisopropyl ethylenebisphosphonate (E) as by-products.

A Type I MW reactor (with reaction test tubes of a volume of 10 ml) was used to optimize this reaction. Triisopropylphosphite (4.0 ml; 16 mmol) and 1,2-dibromoethane (1.7 ml; 19.2 mmol) were placed in a MW test tube. The reactions of the test tube were always securated five times and subsequently MW-heated according to Table 3.

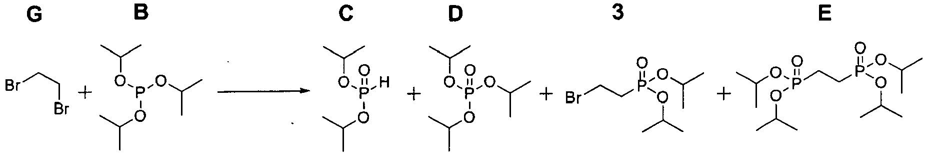

**Table 3. Conditions of the optimization of the preparation of diisopropyl 2-bromoethylphosphonate (3) following Example 3**

| | | | Composition of the reaction mixture according to GC/MS (molar %) | | | | |
|---|---|---|---|---|---|---|---|
| Entry | Temperature (°C) | Time (min) | **B** | **C** | **D** | **3** | **E** |
| 1 | 130 | 30 | 41.5 | 2.6 | 2.0 | 53.4 | 0.4 |
| 2 | 130 | 60 | 9.7 | 2.1 | 2.5 | 83.8 | 2.0 |
| 3 | 130 | 90 | 2.5 | 2.9 | 3.3 | 89.0 | 2.3 |
| 4 | 130 | 120 | 0.0 | 2.7 | 3.8 | 90.5 | 3.1 |
| 5 | 150 | 30 | 0.7 | 4.0 | 4.9 | 87.3 | 3.0 |
| 6 | 170 | 10 | 0.0 | 4.4 | 4.4 | 88.7 | 2.5 |

| | | | | | | | |
|---|---|---|---|---|---|---|---|
| **G** = 1,2-dibromoethane, **B** = triisopropylphosphite, **C** = diisopropyl phosphonate, **D** = triisopropyl phosphate and **E** = tetraisopropyl ethylenebisphosphonate | | | | | | | |

### The preparation of diisopropyl 2-bromoethylphosphonate (3) (see Table 3, Entry 6)

Triisopropylphosphite (4.0 ml; 16 mmol) and 1,2-dibromoethane (1.7 ml; 19.2 mmol) were placed in a MW test tube with a volume of 10 ml; the entire reaction mixture was securated (5x) and while being mixed it was MW-heated with a Type I reactor to 170 °C (max. power of 300 W). This experiment was subsequently repeated nine times. All ten of the reaction mixtures acquired in this way were then jointly evaporated in a rotary vacuum evaporator (65 °C, 2 mbar). According to the GC/MS analyses, this unrefined reaction mixture contained the desired product in a great amount (> 95 mol. %), with the main impurities being triisopropylphosphate and the relevant bisphosphonate. The pure diisopropyl 2-bromoethylphosphonate (**3**) was isolated by vacuum distillation at a temperature of 82-83 °C under a pressure of 0.053 mbar with an 84% yield (36.6 g). According to the GC/MS analysis, the final product contained a relevant bisphosphonate in the amount of 2.6 molar %.

**Diisopropyl 2-bromoethylphosphonate** (**3**): colorless oil, b.v. 82-83 °C/0.053 mbar. GC/MS-EI (*R_{T}* 13.93 min), *m*/*z* (%): 191 and 189 [phosphonic acid⁺] (100). FABMS, *m*/*z* (%): 297 and 295 [M+Na⁺] (9), 275 and 273 [M⁺] (23), 191 and 189 [phosphonic acid⁺] (100). ¹H NMR (DMSO-*d*₆): 4.58 d septets, 2 H, *J*(1',2') = 6.2, *J*(1',P) = 7.9 (H-1'); 3.52 dm, 2 H, *J*(2,P) = 10.1 (H-2); 2.36 dm, 2 H, *J*(1,P) = 18.5 (H-1); 1.24 d, 12 H, *J*(2',1') = 6.2 (H-2'). ¹³C NMR (DMSO-*d*₆): 70.21 d, *J*(1',P) = 6.4 (C-1'); 30.90 d, *J*(1,P) = 133.8 (C-1); 25.81 (C-2); 23.99 d and 23.93 d, *J*(2',P) = 3.9 and *J*(2',P) = 4.7 (C-2'). For C₈H₁₈BrO₃P (273.1) calc'd: 35.18 % C, 6.64 % H, 29.26 % Br, 11.34 % P; found: 35.24 % C, 6.57 % H, 29.05 % Br, 11.47 % P.

### Example 4 - The preparation of diisopropyl bromomethylphosphonate (4)

Triisopropylphosphite (4.0 ml; 16 mmol) and dibromomethane (1.4 ml; 19.2 mmol) were placed in a MW test tube with a volume of 10 ml; the entire reaction mixture was securated (5x) and while being mixed it was MW-heated in a Type I reactor at 150 °C for 30 min (max. power of 300 W). This procedure was repeated another nine times. All ten of the reaction mixtures acquired in this way were then jointly evaporated in a rotary vacuum evaporator (65 °C, 2 mbar). According to the GC/MS analysis, this unrefined reaction mixture contained the desired product in a great amount (> 95 mol. %), with the main impurity being the relevant bisphosphonate. The pure diisopropyl bromomethylphosphonate (**4**) was isolated by vacuum distillation at a temperature of 93-95 °C under a pressure of 0.26 mbar with a 78% yield (32.2 g).

**Diisopropyl bromomethylphosphonate** (**4**): colorless oil, b.v. 93-95 °C/0.26 mbar. GC/MS-EI (*R_{T}* 12.76 min), *m*/*z* (%): 177 and 175 [phosphonic acid⁺] (100). FABMS, *m*/*z* (%): 261 and 259 [M⁺] (11), 177 and 175 [phosphonic acid⁺] (100). ¹H NMR (DMSO-*d*₆): 4.62 d septets, 2 H, *J*(1',2') = 6.2, *J*(1',P) = 7.1 (H-1'); 3.25 d, 2 H, *J*(1,P) = 9.7 (H-1); 1.37 d, 6 H and 1.37 d, 6 H, *J*(2', 1') = 6.2, *J*(2',1') = 6.2 (H-2'). ¹³C NMR (DMSO-*d*₆): 72.10 d, *J*(1',P) = 6.9 (C-1'); 23.96 d and 23.76 d, *J*(2',P) = 4.1 and *J*(2',P) = 5.3 (C-2'); 18.74 d, *J*(1,P) = 159.5 (C-1). For C₇H₁₆BrO₃P (259.1) calc'd: 32.45 % C, 6.22 % H, 30.84 % Br, 11.96 % P; found: 32.57 % C, 6.20 % H, 30.75 % Br, 11.84 % P.

### Example 5

### Optimization of the preparation of diisopropyl iodomethylphosphonate (5) by the reaction of diiodomethane (I) with triisopropylphosphite (B) with the simultaneous production of diisopropyl phosphonate (C), triisopropyl phosphate (D) and tetraisopropyl methylenebisphosphonate (J) as by-products.

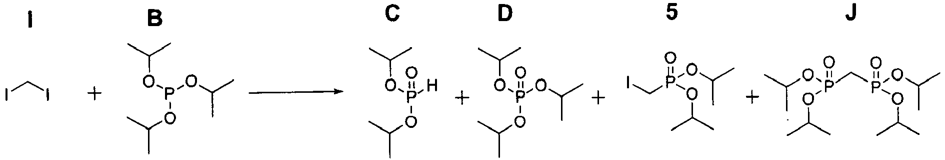

A Type I MW reactor (with reaction test tubes of a volume of 10 ml) was used to optimize the reaction. Triisopropylphosphite (2.0 ml; 8 mmol) and the corresponding amount of diiodomethane (see Table 4) were placed in a MW test tube with a volume of 10 ml; the reaction mixture was always subsequently securated five times and then MW-heated according to Table 4.

**Table 4. Conditions of the optimization of the preparation of diisopropyl iodomethylphosphonate (5) following Example 5a**

| | | | | Composition of the reaction mixture according to GC/MS (molar %) | | | | | |
|---|---|---|---|---|---|---|---|---|---|
| Entry | Time (min) | Temperature (°C) | Molar ratio **I:B** | **B** | **C** | **D** | **5** | **J** | Note |
| 1 | 15 | 80 | 4:1 | 93.8 | 0.6 | 1.5 | 4.1 | 0.0 | *a* |
| 2 | 120 | 90 | 4:1 | 4.9 | 8.9 | 7.4 | 73.5 | 5.3 | *a* |
| 3 | 120 | 90 | 4:1 | 5.7 | 6.4 | 6.7 | 79.3 | 1.9 | *a*+*b* |
| 4 | 120 | 90 | 4:1 | 9.6 | 0.7 | 2.3 | 87.4 | 0.0 | *a*+*b*+*c* |
| 5 | 150 | 90 | 4:1 | 2.3 | 1.2 | 4.1 | 92.4 | 0.0 | *a*+*b*+*c* |
| 6 | 60 | 100 | 4:1 | 0.0 | 2.2 | 2.1 | 95.5 | 0.2 | *a*+*b*+*c* |
| 7 | 180 | 90 | 2:1 | 0.5 | 1.6 | 3.2 | 94.6 | 0.1 | *a*+*b*+*c* |
| 8 | 180 | 90 | 1:1 | 6.7 | 2.7 | 3.4 | 87.1 | 0.1 | *a*+*b*+*c* |
| 9 | 200 | 90 | 1:1 | 0.2 | 3.1 | 3.6 | 92.8 | 0.3 | *a*+*b*+*c* |

| | | | | | | | | | |
|---|---|---|---|---|---|---|---|---|---|
| **I** = diiodomethane, **B** = triisopropylphosphite, **C** = diisopropyl phosphonate, **D** = triisopropyl phosphate and **J** = tetraisopropyl methylenebisphosphonate Note: *a* (securated 5x), *b* (max. power of 50W), *c* (+0.1 ml of material **5**). The effect of the maximum MW power was studied considering the possibilities of local overheating in the application of the maximally reachable MW power. | | | | | | | | | |

### 5a - The preparation of diisopropyl iodomethylphosphonate (5)

Triisopropylphosphite (4.0 ml; 16.0 mmol), diiodomethane (1.3 ml; 16.0 mmol) and diisopropyl iodomethylphosphonate (**5**) (0.1 ml; 0.5 mmol) were placed in a MW test tube with a volume of 10 ml; the entire reaction mixture was securated (5x) and while being mixed it was MW-heated in a Type I reactor at 90 °C for 200 min (max. power of 50 W). This procedure was repeated another nine times. Subsequently, all ten of the reaction mixtures acquired in this way were jointly evaporated in a rotary vacuum evaporator (65 °C, 2 mbar). According to the GC/MS analysis, this unrefined reaction mixture contained the desired product in a great amount (> 90 mol. %), with the main impurity being the relevant bisphosphonate. The pure diisopropyl iodomethylphosphonate (**5**) was isolated by vacuum distillation at a temperature of 76-77 °C under a pressure of 0.05 mbar with an 86% yield (43.3 g). The ¹H NMR and ¹³C NMR analyses were identical with the sample isolated in Example 5b. To determine the reproducibility of the presented resolution for various MW reactors, this experiment was repeated under otherwise identical reaction conditions in a Type II MW reactor. According to the GC/MS analysis, this new reaction mixture contained practically the same amounts of all of the components. The only difference was that it was necessary to extend the reaction time by 40 minutes to reach the same level of conversion, which is in logical accord with the construction differences of the two reactors. Type II (unlike Type I) does not provide focused MW power in the center of the reaction vessel, as a consequence of which a longer reaction time is necessary for the same levels of MW radiation.

### Example 5b

To increase the capacity of the synthesis, an optimization of the reaction of diiodomethane with triisopropylphosphite was performed, in which a Type III MW reactor was used (with a 250 ml reaction vessel). Triisopropylphosphite (113 ml; 470 mmol) and diiodomethane (38 ml; 470 mmol) were placed in a MW reaction vessel with a volume of 250 ml; the reaction mixture was always subsequently securated five times and then MW-heated according to Table 5 always for 160 minutes.

**Table 5. Conditions of the optimization of the preparation of diisopropyl iodomethylphosphonate (5) following Example 5b**

| | | | Composition of the reaction mixture according to GC/MS (molar %) | | | | | |
|---|---|---|---|---|---|---|---|---|
| Entry | Maximum power (W) | Temperature (°C) | **B** | **C** | **D** | **5** | **J** | Note |
| 1 | 200 | 100 | 51.2 | 1.5 | 3.2 | 43.9 | 0.2 | *a*+*b* |
| 2 | 200 | 110 | 12.5 | 2.3 | 4.6 | 80.1 | 0.5 | *a*+*b* |
| 3 | 200 | 120 | 0.0 | 4.1 | 6.0 | 85.4 | 4.5 | *a*+*b* |
| 4 | 200 | 120 | 0.0 | 10.4 | 11.4 | 70.5 | 7.7 | *a* |
| 5 | 100 | 120 | 0.0 | 3.8 | 6.2 | 87.9 | 2.1 | *a*+*b* |
| 6 | 100 | 130 | 0.0 | 4.8 | 5.2 | 84.5 | 5.5 | *a*+*b* |

| | | | | | | | | |
|---|---|---|---|---|---|---|---|---|
| **B** = triisopropylphosphite, **C** = diisopropyl phosphonate, **D** = triisopropyl phosphate and **J** = tetraisopropyl methylenebisphosphonate Note: *a* (securated *5*x), *b* (1 ml of material **5**). The effect of the maximum MW power was studied considering the possibility of local overheating in the application of the maximum reachable MW power. | | | | | | | | |

### 5b - The preparation of diisopropyl iodomethylphosphonate (5)

Triisopropylphosphite (113 ml; 470 mmol), diiodomethane (38 ml; 470 mmol) and diisopropyl iodomethylphosphonate (**5**) (1 ml; 5 mmol) were placed in a reaction vessel with a volume of 250 ml of a Type III MW reactor; the entire reaction mixture was securated (5x) and while being mixed it was MW-heated in a Type III reactor to 120 °C for 120 min (max. power of 100 W). The reaction mixture was subsequently evaporated in a rotary vacuum evaporator (69 °C, 2 mbar). According to the GC/MS analysis, this unrefined reaction mixture contained the desired product in a great amount (> 90 mol. %), with the main impurity being the relevant bisphosphonate. The pure diisopropyl-iodomethylphosphonate (**5**) was isolated by vacuum distillation at a temperature of 75-76 °C under a pressure of 0.05 mbar with an 80% yield (116 g).

**Diisopropyl iodomethylphosphonate** (**5**): colorless oil, b.v. 76-77 °C (75-76 °C in Example 5b)/0.05 mbar. GC/MS-EI (*R_{T}* 14.03 min), *m*/*z* (%): 223 [phosphonic acid⁺] (100). FABMS, *m*/*z* (%): 329 [M+Na⁺] (17), 307 [M⁺] (34), 223 [phosphonic acid⁺] (100). ¹H NMR (DMSO-*d*₆): 4.76 d septets, 2 H, *J*(1',2') = 6.2, *J*(1',P) = 7.6 (H-1'); 3.01 d, 2 H, *J*(1,P) = 10.3 (H-1); 1.36 m, 12 H, (H-2'). ¹³C NMR (DMSO-*d*₆): 71.99 d, *J*(1',P) = 6.5 (C-1'); 23.97 d and 23.80 d, *J*(2',P) = 3.7 and *J*(2',P) = 5.3 (C-2'); 12.70 d, *J*(1,P) = 156.8 (C-1). For C₇H₁₆IO₃P (306.1) calc'd: 27.47 % C, 5.27 % H, 41.46 % I, 10.12 % P; found: 27.58 % C, 5.34 % H, 41.40 % I, 10.19 % P.

### Example 6 - The preparation of diethyl 2-chloroethylphosphonate (6)

Triethylphosphite (2.8 ml; 16 mmol) and 1,2-dichloroethane (4.5 ml; 64 mmol) were placed in a MW test tube with a volume of 10 ml; the entire reaction mixture was securated (5x) and while being mixed it was MW-heated in a Type I reactor to 190 °C for 120 min (max. power of 300 W). This procedure was repeated another nine times. All ten of the reaction mixtures acquired in this way were then jointly evaporated in a rotary vacuum evaporator (65 °C, 2 mbar). According to the GC/MS analysis, this unrefined reaction mixture contained the desired product in a mixture with diethyl ethylphosphonate. The diethyl 2-chloroethylphosphonate (**6**) was isolated by vacuum distillation at a temperature of 74-75 °C under a pressure of 0.08 mbar with a 62% yield (19.8 g).

**Diethyl 2-chloroethylphosphonate** (**6**): colorless oil, b.v. 74-75 °C/0.08 mbar. GC/MS-EI (*R_{T}* 12.12 min), *m*/*z* (%): 145 [phosphonic acid⁺] (90), 138 [M⁺-C₂H₄Cl] (100). FABMS, *m*/*z* (%): 201 [M⁺] (100), 145 [phosphonic acid⁺] (38). ¹H NMR (DMSO-*d*₆): 4.13 m, 4 H, (H-1'); 3.72 dm, 2 H, *J*(2,P) = 9.4 (H-2); 2.30 dm, 2 H, *J*(1,P) = 18.5 (H-1); 1.34 t, 6 H, *J*(2',1') = 7.0 (H-2'). ¹³C NMR (DMSO-*d*₆): 61.97 d, *J*(1',P) = 6.5 (C-1'); 37.59 (C-2); 30.29 d, *J*(1,P) = 136.9 (C-1); 16.37 d, (2',P) = 5.9 (C-2'). For C₆H₁₄ClO₃P (200.6) calc'd: 35.92 % C, 7.03 % H, 17.67 % Cl, 15.44 % P; found: 36.18 % C, 7.14 % H, 17.49 % Cl, 15.53 % P.

### Industrial Applicability

The applicability of this procedure for a continuous-flow microwave reactor allows also the mass industrial synthesis of diethyl or diisopropyl haloalkylphosphonates or diethyl or diisopropyl haloalkyloxyalkylphosphonates, which are further usable in:
- agrochemistry - e.g. ethephon (a globally used material),
- the chemistry of detergents and chelating agents,
- synthetic organic chemistry - in the preparation of agents for a Wittig-Horner reaction and so-called organic-inorganic catalysts,
- the preparation of antivirotics, cancerostatics, antimalarics, antibiotics and military nerve gases.

## Claims

1. A method of the synthesis of diethyl or diisopropyl haloalkylphosphonates and diethyl or diisopropyl haloalkyloxyalkylphosphonates via a microwave-assisted Michaelis-Arbuzov reaction of triethylphosphite or triisopropylphosphite with dihaloalkanes or bis(haloalkyl)ethers in a closed reaction vessel, **characterized in that** the reaction mixture containing
- one equivalent of dihaloalkane or bis(haloalkyl)ether being an iodine, bromine or chlorine derivative, and
- one equivalent of triethylphosphite or triisopropylphosphite, and
- eventually up to 5 molar percent of the desired reaction product,
is heated by microwave irradiation with a standard frequency of 2.45 GHz in the closed vessel to achieve the precise reaction temperature which remains, measured by an IR temperature sensor on the surface of the reaction vessel, in the range from 180 °C to 200 °C for dichloroalkanes and bis(chloroalkyl)ethers, in the range from 130 °C to 170 °C for dibromoalkanes and bis(bromoalkyl)ethers, and in the range from 90 °C to 110 °C for diiodoalkanes and bis(iodoalkyl)ethers; in the subsequent reaction of the first dihaloalkane or bis(haloalkyl)ether halogen atom with a triethylphosphite or triisopropylphosphite the desired diethyl or diisopropyl haloalkylphosphonate or diethyl or diisopropyl haloalkyloxyalkylphosphonate is formed, whereas the reaction of the second halogen atom with the remaining triethylphosphite or triisopropylphosphite, leading to the synthesis of bisphosphonate, no longer occurs under claimed reaction conditions.

2. The method of the synthesis of diethyl or diisopropyl haloalkylphosphonates and diethyl or diisopropyl haloalkyloxyalkylphosphonates according to claim 1, **characterized by** the fact that in the case of an inhomogeneous reaction mixture the desired product in the amount of 0.1-5 molar percent is added to the reaction mixture.

3. The method of the synthesis of diethyl or diisopropyl haloalkylphosphonates and diethyl or diisopropyl haloalkyloxyalkylphosphonates according to claim 1 or 2, **characterized by** the fact that a discontinuous or continuous-flow microwave reactor is used in the closed vessel mode.

4. The method of the synthesis of diethyl or diisopropyl haloalkylphosphonates and diethyl or diisopropyl haloalkyloxyalkylphosphonates according to any of the previous claims, **characterized by** the fact that in the case of the use of a continuous-flow reactor the reaction mixture being fed is heated above the boiling point of the ethyl or isopropylhalogenide being created, which returns from the microwave reactor along with the partially reacted reaction mixture, and the ethyl or isopropylhalogenide created in this way is continuously separated by means of distillation to reduce the risk of its reaction with the phosphite present.

5. The method of the synthesis of diethyl or diisopropyl haloalkylphosphonates and diethyl or diisopropyl haloalkyloxyalkylphosphonates according to any of the previous claims, **characterized by** the fact that the high reactivity of diiodoalkanes or bis(iodoalkyl)ethers is limited by reducing the maximum used microwave power of the reactor from 5 to 50 percent of the maximum power depending on the construction details of the specific reactor to prevent the local overheating of the reaction mixture at low temperatures, at which diiodoalkanes or bis(iodoalkyl)ethers react.

## Patentansprüche

1. Verfahren zur Herstellung von Diethyl- oder Diisopropylhalogen-alkylphosphonaten und Diethyl- oder Diisopropylhalogenalkyloxyalkylphosphonaten mittels einer mikrowellenunterstützter Michaelis-Arbuzov-Reaktion von Triethylphosphit oder Triisopropylphosphit mit Dihalogenalkanen oder Bis (halogenalkyl) ethern in einem geschlossenen Reaktionsgefäß, **dadurch gekennzeichnet,**
**daß** das Reaktionsgemisch, das
- ein Äquivalent Dihalogenalkan oder Bis (halogenalkyl) ether, welches ein Iod-, Brom- oder Chlorderivat ist, und
- Triethylphosphit oder Triisopropylphosphit und
- eventuell bis zu 5 Molprozent des gewünschten Reaktionsprodukts enthält,
durch Mikrowellenbestrahlung mit einer Standardfrequenz von 2,45 GHz im geschlossenen Gefäß erwärmt wird, um die genaue Reaktionstemperatur zu erreichen, die durch einen IR-Temperatursensor auf der Oberfläche des Reaktionsgefäßes im Bereich von 180 ° C bis 200 ° C für Dichloralkane und Bis (chloralkyl) ether, im Bereich von 130 ° C bis 170 ° C für Dibromalkane und Bis (bromalkyl) ether und im Bereich von 90 ° C bis 110 ° C für Diiodalkanine und Bis (Iodalkyl) ether gemessen wird, und
**daß** bei der anschließenden Umsetzung des ersten Dihalogenalkans oder des Bis (halogenalkyl)etherhalogenatoms mit einem Triethylphosphit oder Triisopropylphosphit sich das gewünschte Diethyl- oder Diisopropylhalogenalkylphosphonat oder Diäthylhalogenalkyloxyalkylphosphonat bildet, während die Umsetzung des zweiten Halogenatoms mit dem verbleibenden Triethylphosphit oder Triisopropylphosphit, welches zur Synthese von Bisphosphonat führt, unter den beanspruchten Reaktionsbedingungen nicht mehr auftritt.

2. Verfahren zur Herstellung von Diethyl or Diisopropyl haloalkylphosphonat und Diethyl oder Diisopropyl haloalkyloxyalkylphosphonat nach Anspruch 1, **gekennzeichnet durch** die Tatsache, daß im Fall von heterogenen Reaktionsgemischen das gewünschte Reaktionsprodukt in einer Konzentration von 0.1 - 5 Molarprozent zu dem Reaktionsgemisch hinzugefügt wird.

3. Verfahren zur Herstellung von Diethyl- oder Diisopropylhalogen- alkylphosphonaten und Diethyl- oder Diisopropylhalogenalkyloxyalkylphosphonaten nach Anspruch 1 oder 2, **dadurch gekennzeichnet, daß** bei dem geschlossenen Reaktionsgefäßverfahren ein diskontinuierlicher oder kontinuierlicher Mikrowellenreaktor eingesetzt wird.

4. Verfahren zur Herstellung von Diethyl- oder Diisopropylhalogen- alkylphosphonaten und Diethyl- oder Diisopropylhalogenalkyloxyalkylphosphonaten nach einem der vorhergehenden Ansprüche, **dadurch gekennzeichnet, daß** im Falle der Verwendung eines Durchlaufreaktors das eingespeiste Reaktionsgemisch über den Siedepunkt des entstehenden Ethyl- oder Isopropylhalogenids erhitzt wird, welches zusammen mit dem teilweise umgesetzten Reaktionsgemisch aus dem Mikrowellenreaktor zurückgeführt wird, und das auf diese Weise erzeugte Ethyl- oder Isopropylhalogenid zur Verringerung des Risikos seiner Reaktion mit dem vorhandenen Phosphit durch Destillation kontinuierlich abgetrennt wird.

5. Verfahren zur Herstellung von Diethyl- oder Diisopropylhalogen- alkylphosphonaten und Diethyl- oder Diisopropylhalogenalkyloxyalkylphosphonaten nach einem der vorhergehenden Ansprüche, **dadurch gekennzeichnet, daß** abhängig von den Konstruktionsdetails des spezifischen Reaktors die hohe Reaktivität von Diiodalkanen oder Bis (Iodalkyl)ethern durch Verringerung der maximal eingesetzten Mikrowellenleistung des Mikrowellenreaktors von 5 bis 50 Prozent der maximalen Leistung begrenzt wird, um eine lokale Überhitzung des Reaktionsgemisches bei niedrigen Temperaturen zu verhindern, bei welchen Diiodalkane oder Bis (Iodalkyl)ethers reagieren.

## Revendications

1. Procédé de synthèse d'halogénoalkylphosphonates de diéthyle ou de diisopropyle et d'haloalkyloxyalkylphosphonates de diéthyle ou diisopropyle par réaction de Michaelis-Arbuzov assistée par micro-ondes avec du le phosphite de triéthyle ou du phosphite de triisopropyle avec des dihaloalcanes ou des éthers de bis (halogénoalkyle) dans un récipient de réaction fermé, **characterized** en ce que le mélange réactionnel contenant
- un équivalent de dihaloalcane ou bis(haloalkyle) éther étant un dérivé d'iode, de brome ou de chlore, et
- un équivalent de phosphite de triéthyle ou de phosphite de triisopropyle, et
- éventuellement jusqu'à 5 % en moles du produit de réaction désiré,
est chauffé par irradiation par micro-ondes avec une fréquence standard de 2,45 GHz dans le récipient fermé pour atteindre la température de réaction précise qui reste, mesurée par un capteur de température IR à la surface du récipient de réaction, dans la plage de 180 °C à 200 °C pour les dichloroalcanes et les éthers de bis(chloroalkyle), dans la plage de 130 °C à 170 °C pour les dibromoalcanes et les éthers de bis(bromoalkyle), et dans la plage de 90 °C à 110 °C pour les diiodoalkanes et les éthers de bis(iodoalkyle); dans la réaction subséquente du premier atome d'halogène de dihaloalcane ou de bis(halogénoalkyle) avec un phosphite de triéthyle ou un triphosphite de triisopropyle, on forme le halogénoalkylphosphonate de diéthyle ou de diisopropyl ou l'halogénoalkyloxyalkylphosphonate de diisopropyle ou de diisopropyle souhaité, tandis que la réaction du second atome d'halogène avec le phosphite de triéthyle ou le triphosphate de triisopropyle restant, conduisant à la synthèse du bisphosphonate, ne se produit plus dans les conditions de réaction revendiquées.

2. Procédé de synthèse d'halogénoalkylphosphonates de diéthyle ou de diisopropyle et d'halogénoalkyloxyalkylphosphonates de diéthyle ou de diisopropyle selon la revendication 1, **caractérisé en ce que** dans le cas d'un mélange réactionnel non homogène, le produit désiré en quantité de 0,1 à 5 % molaire est ajouté à le mélange réactionnel.

3. Procédé de synthèse d'halogénoalkylphosphonates de diéthyle ou de diisopropyle et d'halogénoalkyloxyalkylphosphonates de diéthyle ou de diisopropyle selon la revendication 1 ou 2, **characterizé** par le fait qu'un réacteur à micro-ondes discontinu ou à flux continu est utilisé dans le mode de vaisseau fermé.

4. Procédé de synthèse d'halogénoalkylphosphonates de diéthyle ou de diisopropyle et d' halogénoalkyloxyalkylphosphonates de diéthyle ou de diisopropyle selon l'une quelconque des revendications précédentes, par le fait que dans le cas de l'utilisation d'un réacteur à écoulement continu, le mélange réactionnel amené est chauffé au-dessus du point d'ébullition de l'oxyde d'éthyle ou d'isopropyle étant créé, qui retourne à partir du réacteur à micro-ondes avec le mélange réactionnel partiellement réagi, et le halogénure d'éthyle ou d'isopropyle ainsi créé est en continu séparé par distillation pour réduire le risque de réaction avec le phosphite présent.

5. Procédé de synthèse d'halogénoalkylphosphonates de diéthyle ou de diisopropyle et d' halogénoalkyloxyalkylphosphonates de diéthyle ou de diisopropyl selon l'une quelconque des revendications précédentes, par le fait que la haute réactivité des diiodoalkanes ou des éthers bis (iodoalkyle) est limitée en réduisant la puissance micro-ondes utilisée du réacteur de 5 à 50 % de la puissance maximale en fonction des détails de construction du réacteur spécifique afin d'éviter la surchauffe locale du mélange réactionnel aux basses températures, à laquelle les diiodoalcanes ou les éthers bis (iodoalkyle) réagissent.
